# EUROPÄISCHE PATENTSCHRIFT

(11) **EP 0 551 279 B1**
(45) Veröffentlichungstag und Bekanntmachung des Hinweises auf die Patenterteilung: **14.12.1994**
(21) Anmeldenummer: 91912947.8
(22) Anmeldetag: 19.07.1991
(51) Int. Cl.: B60R 21/00

(54) **SICHERHEITSEINRICHTUNG IN EINEM FAHRZEUG**
SAFETY DEVICE IN A VEHICLE
INSTALLATION DE SECURITE DANS UN VEHICULE

(30) Priorität: 12.10.1990 DE 4032386
(43) Veröffentlichungstag der Anmeldung: 21.07.1993
(73) Patentinhaber: AUDI AG, 85002 Ingolstadt (DE)
(72) Erfinder: VOLLMER, Elmar, D-8071 Wettstetten (DE)
(74) Vertreter: Engelhardt, Harald
(86) Internationale Anmeldenummer: EP9101356
(87) Internationale Veröffentlichungsnummer: WO9206866

(56) Entgegenhaltungen:
- EP-A- 357 225
- DE-A- 4 002 448
- FR-E- 94 274
- ATZ, Band 91, Nr. 4, April 1989, STUTTGART DE, Seiten 205-210; "Das Daimler-Benz Beifahrerairbag System" Signalverarbeitung und Auslöselogik

## Beschreibung

Die Erfindung betrifft eine Sicherheitseinrichtung in einem Fahrzeug.

Als Sicherheitseinrichtungen zum Schutz eines Beifahrers in einem Fahrzeug sind passive Systeme bekannt, die ohne aktive Handlung durch den Beifahrer ständig ihre Schutzwirkung ausüben. Ein solches passives Beifahrer-Sicherheitssystem besteht üblicherweise aus einem, bei einem Frontaufprall vor dem Beifahrer aufblasbaren Gassack und einem Kniefänger im Bereich unterhalb des Armaturenbretts zur Abstützung der Oberschenkel des Beifahrers.

Eine positive Schutzwirkung wird erreicht, wenn die geometrischen Verhältnisse bei der Sitzstellung des Fahrzeugsitzes und die Insassengröße, insbesondere die Oberschenkellänge, in richtiger Relation stehen.

Ist dies bei einer kleinen Person nicht der Fall, z. B. bei einer sog. 5%-Frau, wenn der Beifahrersitz in einer hinteren Position steht, können gefährliche Bewegungsabläufe die Folge sein. Die kleine Person rutscht in der Regel vom Sitz, bevor sich die Oberschenkel am Kniefänger abstützen können. Hierdurch können erhebliche Verbiegungen des Rückgrats mit entsprechendem Verletzungsrisiko auftreten. Durch Rückprallwirkungen kann das Risiko noch erhöht werden. Die vorbeschriebene Konstellation, eine kleine Person auf einem weit nach rückwärts gefahrenem Beifahrersitz, tritt relativ häufig auf, da dann eine bequeme große Beinfreiheit zur Verfügung steht.

Eine Reduzierung des vorbeschriebenen Risikos könnte dadurch erreicht werden, daß der Sitzverstellbereich nach hinten einfach beschränkt würde. Dies stellt jedoch keine realastische Lösung dar, da damit für alle Personengrößen der Komfort eingeschränkt würde.

Um eine Verbesserung zu schaffen, ist es bereits bekannt (EP-A 0 357 225), den Aufblasvorgang eines Gassacks in Abhängigkeit der Stellung eines Fahrzeugsitzes und der Körpergröße eines Fahrzeuginsassen sowie der Bedingung, ob ein zusätzlicher Sicherheitsgurt angelegt ist oder nicht, zu steuern. Dazu sind aufwendige Einrichtungen mit Dedektoren zur Messung dieser Bedingungen erforderlich, ebenso wie komplizierte Ansteuereinrichtungen zur Erzielung unterschiedlicher zeitlicher Aufblasvorgänge und Größen des Gassacks.

Bei Fahrzeugen mit den eingangs beschriebenen passiven Sicherheitssystemen aus Gassack und Kniefänger ist es meist üblich und je nach Länderverordnungen auch teilweise vorgeschrieben, zusätzlich als Rückhaltesysteme Sicherheitsgurte einzubauen. Die vorbeschriebenen Risiken liegen bei angelegtem Sicherheitsgurt praktisch nicht vor.

Aufgabe der Erfindung ist es, einen verbesserten Schutz für eine kleinere Person bei einem Frontaufprall bei einem passiven Beifahrersicherheitssystem und nicht angelegtem Sicherheitsgurt zur Verfügung zu stellen.

Diese Aufgabe wird mit den Merkmalen des Anspruchs 1 gelöst.

Gemäß Anspruch 1 wird die Sitzverstellverriegelung zum Halt des Fahrzeugsitzes in Längsrichtung in zwei Positionen verstellbar und entsprechend in zwei Kraftstufen dimensioniert. In der ersten Position bzw. in der ersten Kraftstufe erfolgt ein an sich bekannter fester Halt des Fahrzeugsitzes. In der zweiten Position bzw. in der zweiten Kraftstufe der Sitzverstellverriegelung wird der Fahrzeugsitz durch seine Trägheitskraft und kinetische Energie bei einem Aufprall entlang seines Längsverstellwegs freigegeben.

Die Sitzverstellverriegelung ist für eine Verstellung zwischen den beiden Positionen mit einer Vorrichtung zur Erkennung der Wirkstellung des Sicherheitsgurtes bzw. ob dieser in seiner angelegten oder nicht angelegten Position ist, verbunden. Die Sitzverstellverriegelung wird nun in Abhängigkeit der Wirkstellung des Sicherheitsgurts dergestalt eingestellt, daß bei angelegtem Sicherheitsgurt die Sitzverstellverriegelung in die erste Position mit möglichst festem Halt und bei nicht angelegtem Sicherheitsgurt in die zweite Position mit einer Freigabe bei einer großen Krafteinwirkung verstellt ist. Bei angelegtem Gurt ergeben sich damit keine Veränderungen gegenüber dem bekannten Verhalten eines Fahrzeugsitzes.

Dagegen wird bei nicht angelegtem Sicherheitsgurt und einem entsprechend schweren Frontalaufprall ab einer bestimmten Belastungsschwelle, z. B. über 5 g, der Fahrzeugsitz durch die auf ihn wirkende Beschleunigung freigegeben und annähernd zeitgleich mit dem darauf sitzenden Fahrzeuginsassen nach vorne bewegt. Dadurch kann eine kleine Person am Herunterrutschen vom Fahrzeugsitz gehindert werden, andererseits werden große Personen nicht benachteiligt. Ein nicht besetzter Beifahrersitz kann somit beschleunigungsfest bis ca. 20 g ausgelegt werden.

Die zweite Kraftstufe wird bei der Auslegung so hoch angesetzt, daß bei einem normalen Fahrbetrieb incl. Parkierstöße keinerlei Sitzverschiebungen auftreten können. Es hat sich dabei gezeigt, daß etwa ein 5 g-Pegel zweckmäßig ist.

Eine besonders einfache Ausführung wird gemäß Anspruch 2 erreicht, wenn die Sitzverstellverriegelung als Sollbruchelement ausgebildet ist oder ein solches enthält, das in der zweiten Position in seine Wirkstellung gebracht ist. Es sind jedoch auch andere, an sich bekannte Maßnahmen, wie beispielsweise überdrückbare Rasteinrichtungen, etc., die bei einer bestimmten Belastung den Fahrzeugsitz freigeben, möglich.

Eine einfache und unabhängig vom Zutun des Beifahrers selbsttätig wirkende Verstellung der Sitzverstellverriegelung von der ersten in die zweite Position in Abhängigkeit der Wirkstellung des Sicherheitsgurts wird mit Anspruch 3 angegeben. Dazu wird eine mechanische Verbindung, bevorzugt über einen Seilzug, zwischen der Gurtschloßverriegelung und der Sitzverstellverriegelung verwendet, wobei beim Einstecken der Schloßzunge entsprechend einem angelegtem Gurt eine Verstellung in die zweite Position und beim Ausrasten der Schloßzunge eine Rückverstellung in die erste Position erfolgt.

In einer konkreten, einfach realisierbaren Ausführungsform nach Anspruch 4 besteht die Sitzverstellverriegelung aus einem rohrförmigen Riegel zwischen der Sitzschiene und der Sitzhalterung. Im Rohrbereich ist ein verschiebbares, mit der Gurtschloßverriegelung verbundenes Schiebeteil angeordnet, das in der ersten Position in den Bereich zwischen Sitzschiene und Sitzhalterung gebracht ist und somit dort den Rohrquerschnitt verstärkt. In der zweiten Position ist das Schiebeteil außerhalb dieses Bereichs gebracht, so daß dann der rohrförmige Riegel ohne Verstärkung als abscherbares Sollbruchelement wirkt. Das Schiebeteil kann mit einer Rückstellfeder versehen sein, die zugleich über den Seilzug die Rückstellung eines durch die Schloßzunge betätigbaren Rastelements im Gurtschloß bewirkt.

Mit Anspruch 5 wird eine alternative Ausführungsform für einen Fahrzeugsitz mit elektrischer Sitzverstellung beansprucht. Hier ist es vorteilhaft, die Verstellung der Sitzverstellverriegelung in die jeweilige erste und zweite Position über einen ansteuerbaren Sperrmagneten elektrisch durchzuführen. Ein Ansteuersignal in Abhängigkeit der Wirkstellung eines Sicherheitsgurts kann auch hier von der Gurtschloßverriegelung, beispielsweise durch einen Kontaktschalter, abgenommen werden.

Da das zu lösende Problem nur dann auftritt, wenn der Fahrzeugsitz in eine hintere Sitzposition verstellt ist, ist es ausreichend, eine Freigabe bei hoher Belastung auch nur dann vorzusehen oder gemäß Anspruch 6 über ein Bremselement abzubremsen und/oder über einen zweckmäßig gepufferten Anschlag den Verschiebeweg zu begrenzen. Damit wird erreicht, daß der Fahrzeugsitz durch seine Freigabe und Beschleunigung über seine Lehne nicht zusätzlich Energie auf den darauf sitzenden Fahrzeuginsassen überträgt.

Anhand eines Ausführungsbeispiels wird die Erfindung mit weiteren Merkmalen, Einzelheiten und Vorteilen näher erläutert.

Die einzige Figur zeigt einen schematischen Schnitt durch einen Teil einer erfindungsgemäßen Sicherheitseinrichtung.

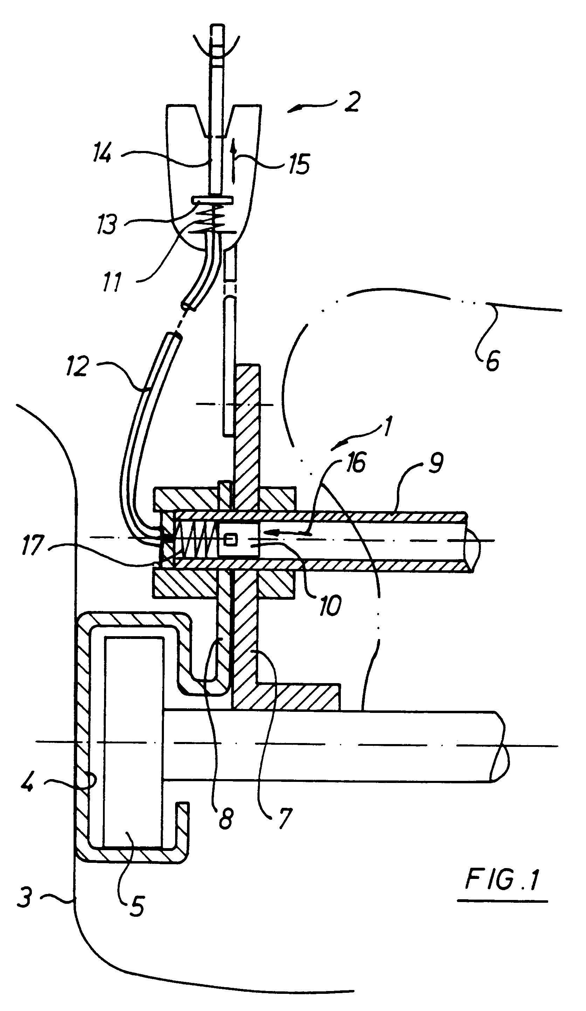

In Fig. 1 sind eine Sitzverstellverriegelung 1 und eine Gurtschloßverriegelung 2 schematisch im Schnitt dargestellt, die beide Teile einer Sicherheitseinrichtung in einem Fahrzeug sind. Diese Sicherheitseinrichtung besteht aus einem aufblasbaren Gassack vor einem Fahrzeuginsassen und einem Kniefänger sowie einem Sicherheitsgurt als Rückhalteeinrichtung, wobei diese Teile nicht dargestellt sind.

In Fig. 1 ist eine an einem Längsträger 3 der Karosserie angebrachte Sitzschiene 4 zu erkennen, in der über Rollen 5 ein Fahrzeugsitz längs verschiebbar gehalten ist. Vom Fahrzeugsitz sind ein Teil eines Sitzkissens 6 sowie eine plattenförmige, senkrecht stehende Sitzhalterung 7 dargestellt. An der Sitzschiene 4 ist ein senkrecht stehender Steg 8 angeformt, an dem die Sitzhalterung 7 entlang bewegbar ist.

Die Sitzverstellverriegelung 1 umfaßt einen rohrförmigen Riegel 9, der in fluchtende Ausnehmungen am Steg 8 und an der Sitzhalterung 7 quer zur Längsverstellrichtung eingreift und den Fahrzeugsitz arretiert. Bei einer Sitzlängsverstellung kann dieser Riegel 9 mit Hilfe eines nicht dargestellten Handgriffs oder eleketrischen Antriebs ausgerastet werden.

Im Inneren des rohrförmigen Riegels 9 ist ein Schiebeteil 10 angebracht, das mit einer Rückstellfeder 17 belastet und mit einem Ende eines Seilzugs 12 verbunden ist.

Das andere Ende des Seilzugs 12 ist mit einer Druckplatte 13 über eine Rückstellfeder 11 im Gurtschloß 2 verbunden, die mit einer Schloßzunge 14 im Gurtschloß 2 nach unten bewegbar ist. Die Federkraft der Rückstellfeder 11 ist größer als die der Rückstellfeder 17.

Die dargestellte Anordnung hat folgende Funktion:

Das Schiebeteil 10 ist in einer ersten Position bei angelegtem Sicherheitsgurt dargestellt, in der es den rohrförmigen Riegel 9 im Bereich zwischen dem Steg 8 und der Sitzhalterung 7 verstärkt, wodurch ein an sich bekannter und fester Halt des Fahrzeugsitzes gegenüber der Karosserie erreicht ist. Wenn die Schloßzunge 14 aus dem Gurtschloß 2 gelöst wird (Pfeil 15), wird die Druckplatte 13 nach oben bewegt und das Schiebeteil 10 aufgrund der Federkraft der Feder 11 nach links (Pfeil 16) aus dem Bereich des Stegs 8 bewegt. Damit liegt zwischen dem Steg 8 und der Sitzhalterung 7 nur noch die Wand des rohrförmigen Riegels 9. Diese Wandstärke ist so dimensioniert, daß sie als Sollbruchelement bei einer vorbestimmten Krafteinwirkung auf den Fahrzeugsitz bei einem Frontalaufprall wirkt und für eine Freigabe des Sitzes abschert. Damit wird erreicht, daß bei nicht angelegtem Gurt und entsprechend schwerem Frontalaufprall der Fahrzeugsitz durch die auf ihn wirkende Beschleunigung annähernd zeitgleich mit dem darauf sitzenden Insassen nach vorne bewegt wird, wodurch eine kleine Person am Herunterfallen vom Sitz vor Erreichen des Kniefängers gehindert wird.

Der zur Bewegung nach vorne freigegebene Sitz kann gegebenenfalls durch (nicht dargestellte) Zusatzeinrichtungen, wie Bremseinrichtungen, Puffer oder Anschläge, gebremst und/oder wegbegrenzt werden. Eine entsprechende Bewegung des Fahrzeugsitzes bei einem Heckaufprall nach hinten kann ebenfalls gebremst, frei oder wegbegrenzt festgelegt werden.

## Patentansprüche

1. Sicherheitseinrichtung in einem Fahrzeug,
mit einem aufblasbaren Gassack und einem Kniefänger,
mit wenigstens einem, in Längsrichtung verschiebbaren und durch eine Sitzverstellverriegelung gehaltenen Fahrzeugsitz, insbesondere einem Beifahrersitz, und
mit einem anlegbaren Sicherheitsgurt mit einer Vorrichtung zur Erkennung der Wirkstellung des Sicherheitsgurts bzw. ob sich dieser in seiner angelegten oder nichtangelegten Position befindet,
dadurch gekennzeichnet,
daß die Sitzverstellverriegelung (1) zum Halt des Fahrzeugsitzes in zwei Positionen verstellbar und entsprechend in zwei Kraftstufen dimensioniert ist, wobei in der ersten Position bzw. in der ersten Kraftstufe ein an sich bekannter fester Halt des Fahrzeugsitzes erfolgt, und in der zweiten Position bzw. in der zweiten Kraftstufe die Sitzverstellverriegelung (1) bei einer vorbestimmten Krafteinwirkung durch die Trägheitskraft und kinetische Energie des Fahrzeugsitzes bei einem Aufprall freigegeben wird, so daß der Fahrzeugsitz in Verstellrichtung bewegbar ist, und
daß die Sitzverstellverriegelung (1) für eine Verstellung mit der Vorrichtung zur Erkennung der Wirkstellung des Sicherheitsgurts verbunden ist, und die Sitzverstellverriegelung (1) in Abhängigkeit der Wirkstellung des Sicherheitsgurts eingestellt ist, daß bei angelegtem Sicherheitsgurt die Sitzverstellverriegelung (1) in die erste Position und bei nicht angelegtem Sicherheitsgurt in die zweite Position verstellt ist.

2. Sicherheitseinrichtung nach Anspruch 1, dadurch gekennzeichnet, daß die Sitzverstellverriegelung (1) als Sollbruchelement ausgebildet ist, das in der Zweiten Position in seine Wirkstellung gebracht ist.

3. Sicherheitseinrichtung nach Anspruch 1 oder 2, dadurch gekennzeichnet, daß die Verstellung der Sitzverstellverriegelung (1) mechanisch, bevorzugt über einen Seilzug (12), und die Gurtschloßverriegelung (2) erfolgt, wobei beim Einstecken der Schloßzunge (14) entsprechend einem angelegten Gurt eine Verstellung in die erste Position erfolgt und beim Ausrasten der Schloßzunge (14) die Sitzverstellverriegelung (1) wieder in die zweite Position entsprechend einem nicht angelegten Gurt geführt wird.

4. Sicherheitseinrichtung nach Anspruch 3, dadurch gekennzeichnet, daß die Sitzverstellverriegelung (1) einen rohrförmigen Riegel (9) zwischen Sitzschiene (4) und Sitzhalterung (7) enthält, und daß im Rohrbereich ein verschiebbares, mit der Gurtschloßverriegelung (2) verbundenes Schiebeteil (10) angeordnet ist, das in der ersten Position in den Bereich zwischen Sitzschiene (4) und Sitzhalterung (7) zur Verstärkung des Rohrquerschnitts und in die zweite Position außerhalb dieses Bereichs schiebbar ist, so daß dann der rohrförmige Riegel (9) ohne Verstärkung als Sollbruchelement wirkt.

5. Sicherheitseinrichtung nach einem der Ansprüche 1 bis 4, dadurch gekennzeichnet, daß bei einer elektrischen Sitzverstellung die Verstellung der Sitzverstellverriegelung (1) in die jeweilige erste und zweite Position über einen ansteuerbaren Sperrmagneten durchführbar ist und ein entsprechendes Steuersignal von der Gurtschloßverriegelung (2) abgenommen wird.

6. Sicherheitseinrichtung nach einem der Ansprüche 1 bis 5, dadurch gekennzeichnet, daß nach Freigabe des Fahrzeugsitzes durch die Sitzverstellvorrichtung (1) in deren zweiter Position bei großer Krafteinwirkung die Längsbewegung des Fahrzeugsitzes durch ein Bremselement gebremst und/oder durch einen Anschlag auf einen vorbestimmten Weg begrenzt wird.

## Claims

1. Vehicular safety device,
comprising an inflatable airbag and a knee restraint,
comprising at least one longitudinally displaceable vehicle seat, more particularly a front passenger seat, retained by a seat locking device, and
comprising a fastenable safety belt having a mechanism for detecting the operational setting of the safety belt and whether the latter is in its fastened or unfastened position,
characterised in that
the seat locking device (1) for retaining the vehicle seat is adjustable in two positions and designed accordingly in two force stages, the vehicle seat being held firmly in a *per se* conventional manner in the first position, or first force stage, and in the second position, or second force stage, the seat locking device (1) being released should there be predetermined forces operating due to the inertial force and kinetic energy of the vehicle seat in the event of an impact, thereby allowing the vehicle seat to be moved in the direction of adjustment, and
that for an adjustment the seat locking device (1) is connected to the mechanism for detecting the operational setting of the safety belt, and the seat locking device (1) is set in dependence on the operational setting of the safety belt, that when the safety belt is fastened the seat locking device (1) is adjusted into the first position and when the safety belt is unfastened is adjusted into the second position.

2. Safety device according to claim 1, characterised in that the seat locking device (1) is in the form of a nominal breaking element which in the second position has been moved into its operational position.

3. Safety device according to claim 1 or 2, characterized in that the seat locking device (1) is adjusted mechanically, preferably via a cable (12) and the belt buckle locking device (2), and when the buckle latch (14) is inserted, consistent with a fastened belt, adjustment into the first position takes place, and when the buckle latch (14) is disengaged the seat locking device (1) is guided back into the second position, consistent with an unfastened belt.

4. Safety device according to claim 3, characterized in that the seat locking device (1) contains a tubular interlock device (9) between the seat slide (4) and the seat mounting (7), and that in the tubular region there is arranged a displaceable sliding member (10) connected to the belt buckle locking device (2), said member (10) being adapted to slide in the first position into the area between the seat slide (4) and seat mounting (7) so as to reinforce the cross-section of the tube, and to slide into the second position outside said area, whereupon without reinforcement the tubular interlock device (9) acts as a nominal breaking element.

5. Safety device according to any of claims 1 to 4, characterised in that in the case of electric seat adjustment the adjustment of the seat locking device (1) into the respective first and second positions can be performed via a controllable locking magnet, and a corresponding control signal is taken from the buckle locking device (2).

6. Safety device according to any of claims 1 to 5, characterised in that after the vehicle seat has been released by the seat locking device (1) in the second position thereof, in the event of major forces operating the longitudinal movement of the vehicle seat is braked by a braking element and/or is limited by a limit stop to a predetermined travel.

## Revendications

1. Dispositif de sécurité dans un véhicule automobile, comprenant
un coussin à gaz gonflable et un amortisseur pour les genoux,
au moins un siège de véhicule, en particulier un siège de passager, qui est déplaçable en direction longitudinale et est immobilisé par un verrou de réglage de position du siège,
une ceinture de sécurité qui Peut être attachée et qui est munie d'un dispositif Pour signaler la position effective de la ceinture de sécurité, c'est-a-dire pour indiquer si celle-ci est dans sa position attachée ou non attachée,
caractérisé en ce que
le verrou (1) de réglage de position du siège, destine a immobiliser le siège du véhicule, peut être placé dans deux positions et est dimensionné en deux échelons de force correspondants, de sorte que, dans la première position ou au premier échelon de force, il se produit une immobilisation complète en soi connue du siège du véhicule et, dans la seconde position ou au second échelon de force, le verrou (1) de réglage de position du siège est libéré, lors de l'application d'une force prédéterminée, par la force d'inertie et l'énergie cinétique du siège du véhicule en cas de collision, ce qui fait que le siège du véhicule est déplaçable dans la direction de son réglage,
et en ce qu'en vue de son positionnement, le verrou (1) de réglage de position du siège est relié au dispositif signalant la position effective de la ceinture de sécurité et le verrou (1) de réglage de position du siège est réglé en fonction de la position effective de la ceinture de sécurité, en ce sens que, lorsque la ceinture de sécurité est attachée, le verrou (1) de réglage de position du siège est placé dans sa première position et que, lorsque la ceinture de sécurité n'est pas attachée, il est placé dans sa seconde position.

2. Dispositif de sécurité selon la revendication 1, caractérisé en ce que le verrou (1) de réglage de position du siège est réalisé sous la forme d'un élément destiné a la rupture qui est mis dans sa position active lorsque le verrou est dans la seconde position.

3. Dispositif de sécurité selon la revendication 1 ou 2, caractérisé en ce que le positionnement du verrou (1) de réglage de position du siège s'effectue mécaniquement, de préférence au moyen d'un câble sous gaine (12) et du verrou (2) de la ceinture, de sorte que, lorsque la lame d'attache (14) est encliquetée, ce qui correspond a une ceinture attachée, il se produit un déplacement dans la première position et, lorsque la lame d'attache (14) est désencliquetée, le verrou (1) de réglage de position du siège est ramené dans la seconde position, correspondant à une ceinture non attachée.

4. Dispositif de sécurité selon la revendication 3, caractérisé en ce que le verrou (1) de réglage de position du siège comprend un pêne tubulaire (9) entre un rail de siège (4) et un support de siège (7), et en ce qu'il est disposé, dans la région du tube, un élément mobile coulissant (10) qui est relié au verrou (2) de la ceinture et qui, dans la première position, peut être placé dans la région entre le rail de siège (4) et le support de siège (7) pour renforcer la section du tube et, dans la seconde position, peut être placé en dehors de cette région, de sorte que le pêne tubulaire (9) se comporte alors, sans renforcement de sa section, comme un élément destiné a la rupture.

5. Dispositif de sécurité selon l'une quelconque des revendications 1 à 4, caractérisé en ce qu'en cas de réglage électrique du siège, le positionnement du verrou (1) de réglage de position du siège dans chacune des première et seconde positions peut être effectué au moyen d'un électro-aimant de blocage excitable et un signal de commande correspondant est émis par le verrou (2) de la ceinture.

6. Dispositif de sécurité selon l'une quelconque des revendications 1 à 5, caractérisé en ce qu'après la libération du siège du véhicule par le dispositif (1) de réglage de position du siège dans sa seconde position, sous l'action d'une force intense, le mouvement longitudinal du siège du véhicule est freiné par un élément de freinage et/ou limité a une course prédéterminée par une butée.
